# EUROPÄISCHE PATENTSCHRIFT

(11) **EP 1 278 588 B1**
(45) Veröffentlichungstag und Bekanntmachung des Hinweises auf die Patenterteilung: **01.02.2006**
(21) Anmeldenummer: 01940122.3
(22) Anmeldetag: 05.04.2001
(51) Int. Cl.: B01D 53/14, B01D 53/00, B01D 47/00

(54) **VERFAHREN UND ANLAGE ZUR ABTRENNUNG VON HOLZINHALTSSTOFFEN AUS BEI DER HOLZVERARBEITUNG ENTSTEHENDEN GASEN**
METHOD AND INSTALLATION FOR SEPARATING WOOD CONSTITUENTS FROM GASES PRODUCED DURING WOOD PROCESSING
PROCEDE ET INSTALLATION POUR SEPARER DES CONSTITUANTS DE BOIS CONTENUS DANS DES GAZ PRODUITS LORS DU TRAVAIL DU BOIS

(30) Priorität: 05.05.2000 DE 10021951
(43) Veröffentlichungstag der Anmeldung: 29.01.2003
(73) Patentinhaber: Clausthaler Umwelttechnik-Institut Gmbh (Cutec - Institut), 38678 Clausthal-Zellerfeld (DE); Fraunhofer-Gesellschaft zur Förderung der angewandten Forschung e.V., 80686 München (DE)
(72) Erfinder: SIEVERS, Michael, 38678 Clausthal-Zellerfeld (DE); BECKER, Marko, 54329 Konz/DE (DE); GREUBEL, Dieter, 38112 Braunschweig (DE)
(74) Vertreter: Gramm, Werner
(86) Internationale Anmeldenummer: PCT/DE2001/001310
(87) Internationale Veröffentlichungsnummer: WO 2001/085310

(56) Entgegenhaltungen:
- DE-A- 3 822 943
- DE-A- 4 212 164
- FR-A- 2 523 280
- US-A- 5 277 707

## Beschreibung

Die Erfindung betrifft ein Verfahren zur Abtrennung von Holzinhaltsstoffen aus bei der Holzverarbeitung entstehenden Gasen sowie eine Anlage zur Durchführung dieses Verfahrens.

Bei der Schnittholztrocknung, bei der Defibration von Holzpartikeln sowie bei der Trocknung von Holzpartikeln zur Fertigung von Holzwerkstoffen werden Holzinhaltsstoffe freigesetzt, die zu geruchsintensiven Abgasemissionen führen. Als besonders umweltrelevant sind die geruchsintensiven Aldehyde und Carbonsäuren anzusehen. Vermehrt in den Vordergrund der Diskussionen treten auch die Terpene, da deren sensibilisierende Eigenschaften insbesondere aus Innenraum- sowie Arbeitsplatzuntersuchungen in der Holzverarbeitung bekannt wurden.

In der Vergangenheit wurde die Abgasreinigung durch die Forderung bestimmt, Emissionsgrenzwerte für partikelförmige Stoffe zu unterschreiten. Aerosole und geruchsbelästigende organische Stoffe werden durch die nachgeschalteten Verfahren nicht oder nur in geringem Maße beseitigt.

Nach dem Stand der Technik werden diese geruchsintensiven Trocknergase vornehmlich durch Kombination verschiedener in Reihe geschalteter Sekundärabscheider gereinigt. Es gibt einige Neuentwicklungen in der Abgasreinigung, die auch die Geruchsemissionen reduzieren. Hierzu gehören thermische, chemische und biologische Oxidationsverfahren, wobei die chemischen und biologischen Verfahren häufig mit Wäschern und/oder Nasselektrofiltern kombiniert werden. Bei den Oxidationsverfahren werden die geruchsintensiven organischen Stoffe weitgehend zu Kohlendioxid und Wasser oxidiert. Die genannten Abgasreinigungsverfahren werden üblicherweise bei konventionellen Spänetrocknern eingesetzt, d.h. als Trocknungsgas werden bei direkt beheizten Systemen Mischungen aus Rauchgas und Frischluft und bei indirekt beheizten Systemen ausschließlich Frischluft eingesetzt.

Neben diesen konventionellen Trocknungstechniken wird für die Spänetrocknung seit kurzem auch die Trocknung mit geschlossenem Gaskreislauf eingesetzt. Untersuchungen zur konvektiven Spänetrocknung in überhitztem Wasserdampf haben zur Entwicklung eines emissionsfreien und energetisch günstigen Holzspänetrocknungssystems im geschlossenen Gaskreislauf geführt. Dabei muss die den Holzspänen entnommene Feuchte entweder durch Kondensation abgetrennt oder als Sekundärgas in einer Nachverbrennung verbrannt werden. Technische Anlagen mit geschlossenem Gaskreislauf existieren bereits in Deutschland, Holland, Canada und den Vereinigten Staaten von Amerika.

Die im Trocknungsgas enthaltenen Terpene sind für die chemische und Duftstoffindustrie von erheblicher Bedeutung. Ein Abbau der Terpene durch biologische, chemische oder thermische Oxidation ist daher aus ökonomischen und ökologischen Gründen nicht sinnvoll.

In dem polnischen Patent PL 156 404 B1 ist ein Verfahren zur Terpengewinnung beschrieben. Demnach werden die aus dem Prozess austretenden Dämpfe zunächst mit einem Partikelfilter gefiltert und anschließend einer nahezu vollständigen Kondensation (1. Kühlstufe) unterworfen. Das Kondensat der ersten Kühlstufe fließt in eine zweite Kühlstufe, in der eine weitere Abkühlung des Kondensates stattfindet. Das aus der zweiten Stufe austretende Kondensat wird anschließend in einem Separator behandelt, wobei sich das Kondensat unter dem Einfluss der Schwerkraft in drei Schichten aufteilt: obere Schicht = Mischung aus Terpenen, mittlere Schicht = stabile Emulsion von Terpenen in Wasser, untere Schicht = Wasser. Die stabile Emulsion löst sich nach ausreichend langem Warten auf, so dass die zuvor emulgierten Terpene dann ebenfalls zu der oberen Flüssigkeitsschicht aufschwimmen. Die obere Flüssigkeit wird abgetrennt und Rohterpentinöl genannt. Das Rohterpentinöl wird in einer Rektifikationsstufe so aufbereitet, dass es den hiesigen Qualitätsanforderungen entspricht. Die Ausbeute betrug dabei ca. 85 % bezogen auf das Rohterpentinöl.

Der Erfindung liegt die Aufgabe zugrunde, ein Verfahren und eine Anlage zur Abtrennung von Holzinhaltsstoffen aus Gasen der Holzverarbeitung, insbesondere der Schnittholz- und Holzspänetrocknung sowie der Defibration zu entwickeln, das bzw. die insbesondere zu einem verbesserten Umweltschutz führt und wirtschaftlich durchführbar ist.

Hinsichtlich des Verfahrens wird diese Aufgabe erfindungsgemäß durch folgende Verfahrensschritte gelöst:
a) Das aus der Holzverarbeitung kommende Rohgas wird bei einer Temperatur > 40°C und einem Druck > 0,5 bar in intensiven Kontakt mit einer Flüssigkeit gebracht und so ein Stoffaustausch zwischen Gas- und Flüssigkeitsphase bewirkt, der zu einer Anreicherung von Harzen, organischen Säuren und Staubpartikeln in der Flüssigphase 1 führt;
b) anschließend wird das teilgereinigte Rohgas um eine Temperaturdifferenz > 10°C gekühlt unter gleichzeitiger Kondensation der sich noch in dem teilgereinigten Rohgas befindlichen Inhaltsstoffe zur Bildung einer Flüssigphase 2 bestehend aus Wasser und verschiedenen Holzinhaltsstoffen wie Verbindungen der Stoffgruppe Terpene, Methanol, Ethanol und Carbonsäuren, die sowohl in gelöster Form als auch als aufschwimmende, zum Teil emulgierte Phase vorliegt;
c) die Terpene sowie die aufschwimmende Phase werden als Fraktion 2 aus der Flüssigphase 2 abgetrennt, aus der eine nur gering belastete Wasserphase als Fraktion 3 übrig bleibt.

Hinsichtlich einer zur Durchführung dieses Verfahrens geeigneten Anlage wird die vorstehend genannte Aufgabe durch folgende Merkmale gelöst:
a) Eine erste Stufe wird gebildet durch einen Kontaktapparat, z.B. durch eine Waschkolonne mit einem kühl- und/oder beheizbaren Kolonnensumpf, für die Vermischung und den Stoffaustausch von der durch das Rohgas gebildeten Gasphase und einer Flüssigkeitsphase, mit einem Kreislaufsystem für die Flüssigphase 1 und einem Anschluss an das Kreislaufsystem zur Abzweigung eines Teilstromes als Fraktion 1;
b) eine nachgeschaltete zweite Stufe wird durch einen Kühlapparat gebildet, z.B. durch einen Kondensator zur Kühlung des teilgereinigten Rohgases mit gleichzeitiger Kondensation der kondensierbaren Gasinhaltsstoffe, und einen kühlbaren Vorlagebehälter zur Sammlung des Kondensats mit einem Ablauf für die Flüssigphase 2 und einem Gasaustritt für das Reingas;
c) dem Ablauf für die Flüssigphase 2 ist ein eine dritte Stufe bildender Trennapparat, z.B. ein kühlbarer Leichtstoffabscheider, zur Abtrennung von Terpenen aus der Flüssigkeitsphase 2 nachgeschaltet.

Die weitgehende Abtrennung der Harze und Stäube führt zu einem großen Vorteil bei der nachgeschalteten Kondensation. Denn hier bildet das Kondensat nunmehr zwei klare Phasen aus, nämlich eine Mischung aus Terpenen und eine wässrige Phase. Die bei dem in dem vorstehend zitierten polnischen Patent beschriebenen Verfahren auftretende stabile Emulsion als dritte Phase liegt bei dem erfindungsgemäßen Verfahren nicht vor, so dass eine Trennung unter Schwerkrafteinfluss erheblich erleichtert wird. Überflüssig wird zudem der bei dem Verfahren gemäß dem polnischen Patent notwendige Partikelfilter.

Von großer wirtschaftlicher Bedeutung ist zudem die durch die Kondensation entstehende Wärme, die rückgewonnen und energetisch genutzt werden kann.

Zusätzlich kann es erfindungsgemäß vorteilhaft sein, wenn der intensive Kontakt zwischen dem Rohgas und der Flüssigkeit bei einer Flüssigkeitstemperatur in der Nähe des Taupunktes, z.B. bei 75°C, erfolgt, um so die anfallende Kondensatmenge zu vermindern.

Als Kontaktapparat für die Vermischung und den Stoffaustausch von Gasphase und Flüssigphase 1 kann eine Waschkolonne mit einem beheizbaren und/oder kühlbaren Kolonnensumpf vorgesehen werden. Grundsätzlich geeignet sind insbesondere
- eine Absorptionskolonne als Gegenstromwäscher oder Gleichstromwäscher mit oder ohne Einbauten,
- ein Sprühwäscher mit Sprühdüsen für Flüssigkeitsverteilung,
- ein Niederdruck-Venturi-Wäscher,
- eine Blasensäule mit Gasverteilung innerhalb der Flüssigkeit und
- ein Schlaufenreaktor.

In einer Weiterentwicklung des Verfahrens ist es möglich, dass aus der mit Harzen und Staubpartikeln angereicherten Flüssigphase 1 ein Teilstrom (Fraktion 1) abgezogen und einer Nachverbrennung oder einer stofflichen Nutzung, z.B. als Leimersatzwasser, zugeführt wird. Alternativ besteht die Möglichkeit, dass aus der mit Harzen und Staubpartikeln angereicherten Flüssigphase 1 ein Teilstrom (Fraktion 1) abgezogen und durch Abtrennung der Inhaltsstoffe aufgearbeitet wird. Dabei können die abgetrennten Inhaltsstoffe durch Einleitung in eine Feuerung energetisch verwertet, oder aber durch nachfolgende Abtrennung der Harze und/oder organischen Säuren stofflich genutzt werden.

Als Kühlapparat zur indirekten Kühlung des Gases mit gleichzeitiger Kondensation der kondensierbaren Gasinhaltsstoffe können Rohrbündel-, Platten- oder Fallfilmkondensatoren verwendet werden. Alternativ ist auch eine Direktkondensation durch mit dem sich bildenden Kondensat möglich.

Als Kühlapparate zur direkten Kühlung kann eine Waschkolonne mit einem kühlbaren Kolonnensumpf vorgesehen werden. Grundsätzlich geeignet sind auch hier insbesondere eine Absorptionskolonne als Gegenstromwäscher oder Gleichstromwäscher mit oder ohne Einbauten, ein Sprühwäscher mit Sprühdüsen für Flüssigkeitsverteilung, ein Niederdruck-Venturi-Wäscher, eine Blasensäule mit Gasverteilung innerhalb der Flüssigkeit oder aber ein Schlaufenreaktor.

In dieser zweiten Aufbereitungsstufe sind Harze und Staubpartikel praktisch nicht mehr vorhanden. Um nennenswerte Terpenkonzentrationen in der Flüssigphase 2 zu erreichen, müssen die Kondensationstemperaturen zumindest 10°C unterhalb der Temperatur der vorhergehenden Stufe liegen.

Als Trennapparat zur Abtrennung der Terpene aus der Flüssigphase 2 lassen sich Leichtstoffabscheider, Tellerseparatoren, Zentrifugen, Röhrenzentrifugen, Dekanter und als Ergänzung zu diesen Vorrichtungen auch eine Pervaporation einsetzen. Da die Emulsion in der Flüssigphase 2 nicht stabil ist, reicht ein Leichtstoffabscheider zur Abtrennung der aufschwimmenden Phase als Fraktion 2 aus. Für die Abtrennung der Terpene kann z.B. zusätzlich die vorstehend genannte Pervaporation eingesetzt werden, bei der eine Aufkonzentrierung der Terpene dadurch erfolgt, dass die Terpene gegenüber Wasser deutlich schneller durch eine Membran diffundieren. Auf der Permeatseite liegt nach Kondensation der Dämpfe ein Zweiphasengemisch vor, aus dem die Terpene ebenfalls durch Einsatz eines Leichtstoffabscheiders abgetrennt werden können. Nach Abtrennung der Fraktion 2 bleibt als Fraktion 3 eine Wasserphase übrig, die nur sehr gering belastet ist, da Harze und Staubpartikel sowie der größte Teil der Terpene bereits abgetrennt wurden. Die restlichen im Wasser enthaltenen Komponenten sind vornehmlich gelöste Terpene (sofern keine Pervaporation eingesetzt wird) sowie organische Säuren. Aufgrund der geringen Belastung der Fraktion 3 ist für den Zweck einer weiteren Nutzung eine kostengünstige Aufbereitung möglich.

In der Zeichnung sind einige als Beispiele dienende Ausführungsformen der Erfindung schematisch dargestellt. Es zeigen
- **Figur 1**: ein Verfahrensfließbild zur Abtrennung von Holzinhaltsstoffen aus bei der Holztrocknung entstehenden Gasen und
- **Figur 2**: eine Anlage zur Durchführung des Verfahrens gemäß Figur 1.

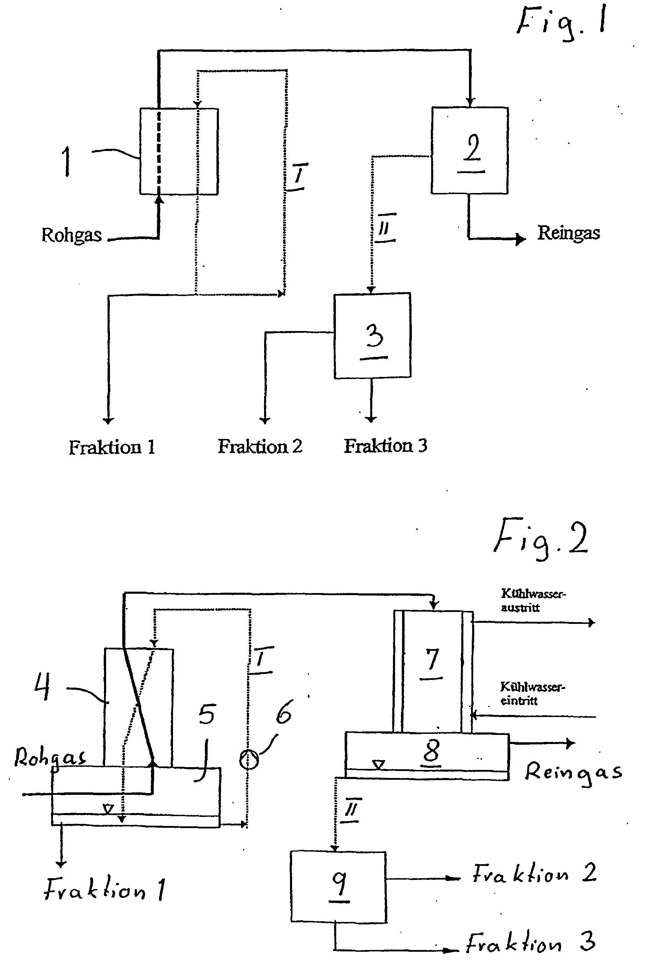

Gemäß dem Verfahrensfließbild wird das aus einer Holztrocknung kommende Rohgas in einer ersten Stufe 1 in einen intensiven Kontakt mit einer Flüssigkeit gebracht, die in Figur 1 als im Kreis geführte Flüssigphase 1 dargestellt ist, die mit Harzen, organischen Säuren und Staubpartikeln angereichert wird, und aus der als Teilstrom eine Fraktion 1 abgezogen wird, die einer Nachverbrennung zugeführt oder durch Abtrennung der Inhaltsstoffe aufgearbeitet und in die Flüssigphase zurückgeführt werden kann.

Das aus der ersten Stufe 1 austretende, teilweise gereinigte Rohgas wird in einer zweiten Stufe 2 gekühlt und einer Kondensation unterworfen, die zur Bildung einer Flüssigphase II führt, die aus Wasser und verschiedenen Verbindungen der Stoffgruppe Terpene besteht. Aus dieser Stufe 2 kann das Reingas unmittelbar in die Atmosphäre abgeleitet oder einer weiteren Behandlung unterzogen werden.

Die Flüssigphase II wird in einer nachgeschalteten Stufe 3 weiter aufbereitet, indem die gelösten Terpene sowie die aufschwimmende Phase als Fraktion 2 abgetrennt werden, wobei eine nur gering belastete Wasserphase als Fraktion 3 übrig bleibt.

Die Figur 2 zeigt für den in Figur 1 dargestellten Verfahrensablauf ein konkretes Ausführungsbeispiel. Das Rohgas wird mit einer Temperatur von 120°C und einer Belastung von 600 ppm Ges.-C in einen Kontaktapparat für die Vermischung und den Stoffaustausch von Gasphase und Flüssigphase I eingeleitet. Vorgesehen ist hierfür eine Waschkolonne 4 mit einem kühl- und/oder beheizbaren Kolonnensumpf 5. Die sich zunehmend mit Harzen, organischen Säuren und Staubpartikeln anreichernde Flüssigphase I wird über eine Pumpe 6 im Kreislauf umgepumpt; aus der Flüssigphase I wird als Fraktion 1 ein Teilstrom abgezogen und zwar ein Volumenstrom von ca. 0,09 l je m³ Gas bei 76°C (der pH-Wert liegt zwischen 3 und 4).

Das aus der Waschkolonne 4 austretende, teilweise gereinigte Rohgas weist bei dem dargestellten Ausführungsbeispiel eine Temperatur von etwa 76°C auf und wird einem Kondensator 7 zugeführt, der von Kühlwasser mit einer Eintrittstemperatur von etwa 38°C beaufschlagt wird. Das Kondensat wird als Flüssigphase II in einem Vorlagebehälter 8 aufgefangen und weist einen pH-Wert von 4 - 5 und bei dem gewählten Ausführungsbeispiel 85 mg Terpene/I bei ca. 50°C auf; der Volumenstrom beträgt ca. 0,3 l je m³ Gas bei 50°C. Aus dem Vorlagebehälter 8 wird das vorstehend bereits erwähnte Reingas abgezogen, das eine Temperatur von etwa 50°C aufweist.

Die Flüssigphase II wird dann einem kühlbaren Trennapparat 9 zugeführt, wo die gelösten Terpene sowie die aufschwimmende Phase als Fraktion 2 abgetrennt und die übrig bleibende, nur noch gering belastete Wasserphase als Fraktion 3 abgeführt werden.

## Patentansprüche

1. Verfahren zur Abtrennung von Holzinhaltsstoffen aus bei der Holzverarbeitung entstehenden Gasen, mit folgenden Verfahrensschritten:
a) das aus der Holzverarbeitung kommende Rohgas wird bei einer Temperatur > 40°C und einem Druck > 0,5 bar in intensiven Kontakt mit einer Flüssigkeit gebracht und so ein Stoffaustausch zwischen Gas- und Flüssigkeitsphase bewirkt, der zu einer Anreicherung von Harzen, organischen Säuren und Staubpartikeln in der Flüssigphase 1 (I) führt;
b) anschließend wird das teilgereinigte Rohgas um eine Temperaturdifferenz > 10°C gekühlt unter gleichzeitiger Kondensation der sich noch in dem teilgereinigten Rohgas befindlichen Inhaltsstoffe zur Bildung einer Flüssigphase 2 (II) bestehend aus Wasser und verschiedenen Holzinhaltsstoffen wie Verbindungen der Stoffgruppe Terpene, Methanol, Ethanol und Carbonsäuren, die sowohl in gelöster Form als auch als aufschwimmende, zum Teil emulgierte Phase vorliegt;
c) die Terpene sowie die aufschwimmende Phase werden als Fraktion 2 aus der Flüssigphase 2 (II) abgetrennt, aus der eine nur gering belastete Wasserphase als Fraktion 3 übrig bleibt.

2. Verfahren nach Anspruch 1, **dadurch gekennzeichnet, dass** der intensive Kontakt zwischen dem Rohgas und der Flüssigkeit bei einer Flüssigkeitstemperatur in der Nähe des jeweiligen Taupunktes, z.B. bei 75°C, erfolgt, um so die anfallende Kondensatmenge zu vermindern.

3. Verfahren nach Anspruch 1 oder 2, **dadurch gekennzeichnet, dass** aus der mit Harzen und Staubpartikeln angereicherten Flüssigphase 1 (I) ein Teilstrom als Fraktion 1 abgezogen und einer Nachverbrennung oder einer stofflichen Nutzung zugeführt wird.

4. Verfahren nach Anspruch 1 oder 2, **dadurch gekennzeichnet, dass** aus der mit Harzen und Staubpartikeln angereicherten Flüssigphase 1 (I) ein Teilstrom alsFraktion 1 abgezogen und durch Abtrennung der Feststoffe und Inhaltsstoffe, z.B. durch Zentrifugation oder Vakuumdestillation, aufgearbeitet wird.

5. Verfahren nach Anspruch 4, **dadurch gekennzeichnet, dass** die abgetrennten Feststoffe und Inhaltsstoffe durch Einleitung in eine Feuerung energetisch verwertet werden.

6. Verfahren nach Anspruch 4, **dadurch gekennzeichnet, dass** die abgetrennten Feststoffe und Inhaltsstoffe durch nachfolgende Abtrennung der Harze und/oder organischen Säuren stofflich genutzt werden.

7. Verfahren nach einem der vorhergehenden Ansprüche, **dadurch gekennzeichnet, dass** die aufschwimmende Phase als Fraktion 2 aus der zweiten Flüssigkeitsphase mit Hilfe eines Leichtstoffabscheiders abgetrennt wird.

8. Verfahren nach einem der vorhergehenden Ansprüche, **dadurch gekennzeichnet, dass** die Abtrennung der Terpene aus der Flüssigphase 2 (II) durch Pervaporation erfolgt, wobei auf der Permeatseite nach Kondensation der Dämpfe ein Zweiphasengemisch vorliegt, aus dem die Terpene mit Hilfe eines Leichtstoffabscheiders abgetrennt werden.

9. Verfahren nach einem der vorhergehenden Ansprüche, **dadurch gekennzeichnet, dass** die nur gering belastete Wasserphase (Fraktion 3) mittels biologischer Verfahren, Membranverfahren, Elektrodialyseverfahren, Nassoxidationsverfahren oder chemischer Oxidationsverfahren aufbereitet wird.

10. Verfahren nach einem der vorhergehenden Ansprüche, **dadurch gekennzeichnet, dass** die bei der Kondensation anfallende Wärme rückgewonnen und energetisch genutzt wird.

11. Anlage zur Durchführung des Verfahrens nach einem der vorhergehenden Ansprüche, mit folgenden Merkmalen:
a) eine erste Stufe (1) wird gebildet durch einen Kontaktapparat, z.B. durch eine Waschkolonne (4) mit einem kühl- und/oder beheizbaren Kolonnensumpf (5), für die Vermischung und den Stoffaustausch von der durch das Rohgas gebildeten Gasphase und einer Flüssigkeitsphase, mit einem Kreislaufsystem für die Flüssigphase 1 (I) und einem Anschluss an das Kreislaufsystem zur Abzweigung eines Teilstromes als Fraktion 1;
b) eine nachgeschaltete zweite Stufe (2) wird durch einen Kühlapparat gebildet, z.B. durch einen Kondensator (7) zur Kühlung des teilgereinigten Rohgases mit gleichzeitiger Kondensation der kondensierbaren Gasinhaltsstoffe, und einen kühlbaren Vorlagebehälter (8) zur Sammlung des Kondensats mit einem Ablauf für die Flüssigphase 2 (II) und einem Gasaustritt für das Reingas;
c) dem Ablauf für die Flüssigphase 2 (II) ist ein eine dritte Stufe (3) bildender Trennapparat (9), z.B. ein kühlbarer Leichtstoffabscheider, zur Abtrennung von Terpenen aus der Flüssigkeitsphase 2 (II) nachgeschaltet.

## Claims

1. Method for separating wood constituents from gases forming during wood processing, comprising the following method steps:
a) the crude gas arriving from the wood processing is brought into intimate contact at a temperature > 40°C and a pressure > 0.5 bar with a liquid and thus produces a mass transfer between gas phase and liquid phase, which mass transfer leads to an enrichment of resins, organic acids and dust particles in the liquid phase 1 (I);
b) the partly purified crude gas is then cooled to a temperature difference > 10°C with simultaneous condensation of the constituents still present in the partly purified crude gas, for the formation of a liquid phase 2 (II) consisting of water and various wood constituents, such as compounds of the group of substances consisting of terpenes, methanol, ethanol and carboxylic acids, which are present both in dissolved form and as a floating, partly emulsified phase;
c) the terpenes and floating phase are separated as fraction 2 from the liquid phase 2 (II), of which an only slightly contaminated aqueous phase remains as fraction 3.

2. Method according to Claim 1, **characterized in that** the intimate contact between the crude gas and the liquid takes place at a liquid temperature close to the respective dew point, for example at 75°C, in order thus to reduce the resulting amount of condensate.

3. Method according to Claim 1 or 2, **characterized in that** a part-stream is taken off as fraction 1 from the liquid phase 1 (I) enriched with resins and dust particles and is fed for subsequent incineration or for utilization in terms of the material.

4. Method according to Claim 1 or 2, **characterized in that** a part-stream is taken off as fraction 1 from the liquid phase 1 (I) enriched with resins and dust particles and is worked up by separating off the solids and constituents, for example by centrifuging or vacuum distillation.

5. Method according to Claim 4, **characterized in that** the solids and constituents separated off are utilized for energy purposes by being passed into a furnace.

6. Method according to Claim 4, **characterized in that** the solids and constituents separated off are utilized in terms of the material by subsequently separating off the resins and/or organic acids.

7. Method according to any of the preceding claims, **characterized in that** the floating phase is separated off as fraction 2 from the second liquid phase with the aid of a light solids remover.

8. Method according to any of the preceding claims,
**characterized in that** the separation of the terpenes from the liquid phase 2 (II) is effected by pervaporation, a two-phase mixture being present on the permeate side after condensation of the vapours, from which mixture the terpenes are separated off with the aid of a light solids remover.

9. Method according to any of the preceding claims, **characterized in that** the only slightly contaminated aqueous phase (fraction 3) is worked up by means of biological methods, membrane methods, electrodialysis methods, wet oxidation methods or chemical oxidation methods.

10. Method according to any of the preceding claims, **characterized in that** the heat obtained in the condensation is recovered and is utilized for energy purposes.

11. Installation for carrying out the method according to any of the preceding claims, comprising the following features:
a) a first stage (1) is formed by a contact apparatus, for example by a wash column (4) having a coolable and/or heatable column bottom (5), for the mixing and the mass transfer of the gas phase formed by the crude gas and a liquid phase, comprising a circulation system for the liquid phase 1 (I) and a connection to the circulation system for diverting a part-stream as fraction 1;
b) a downstream second stage (2) is formed by a cooling apparatus, for example by a condenser (7) for cooling the partly purified crude gas with simultaneous condensation of the condensable gas constituents, and a coolable receiver (8) for collecting the condensate, having a discharge for the liquid phase 2 (II) and a gas outlet for the pure gas;
c) a separation apparatus (9) forming a third stage (3), for example a coolable light solids remover, for separating terpenes from the liquid phase 2 (II) is present downstream of the charge for the liquid phase 2 (II).

## Revendications

1. Procédé pour séparer des constituants du bois contenus dans des gaz produits lors du travail du bois, comprenant les étapes suivantes :
a) le gaz brut provenant du travail du bois est mis en contact, de façon intensive à une température supérieure à 40°C, et une pression supérieure à 0,5 bar, avec un liquide de façon à réaliser un échange de produits entre des phases gazeuses et liquides, qui conduit à un enrichissement en résines, acides organiques et particules de poussière dans la phase liquide 1 (I) ;
b) ensuite, le gaz brut, partiellement purifié, est refroidi selon une différence de température supérieure à 10° C avec condensation simultanée des produits encore contenus dans le gaz brut partiellement purifié, pour obtenir une phase liquide 2 (II) composée d'eau et de divers constituants de bois tels que des constituants des groupes terpènes, méthanol, éthanol et acides carbonés qui sont présents aussi bien à l'état dissous qu'à l'état surnageant, en partie en phase d'émulsion;
c) les terpènes, ainsi que la phase surnageante, sont, en tant que fraction 2, séparés de la phase liquide 2 (II) de sorte qu'il ne reste qu'une phase aqueuse faiblement chargée en tant que fraction 3.

2. Procédé selon la revendication 1, **caractérisé en ce que** le contact intensif entre le gaz brut et le liquide, a lieu à une température de liquide proche de la température de rosée correspondante, par exemple, de l'ordre de 75°C, pour réduire la quantité de condensats précipités.

3. Procédé selon la revendication 1 ou 2, **caractérisé en ce qu'**on retire de la phase liquide 1 (I) qui est enrichie en résines et particules de poussière, un écoulement partiel, en tant que fraction 1 qui est soumise à un brûlage ultérieur ou est utilisée en tant que produit.

4. Procédé selon la revendication 1 ou 2, **caractérisé en ce qu'**on retire de la phase liquide 1 (I) qui est enrichie en résines et particules de poussière, un écoulement partiel, en tant que fraction 1 qui est ensuite traitée pour éliminer les matières grasses et les produits qu'elle referme, par exemple, par centrifugation ou distillation sous vide.

5. Procédé selon la revendication 4, **caractérisé en ce que** les matières grasses et autres produits séparés sont valorisés sur le plan énergétique par brûlage.

6. Procédé selon la revendication 4, **caractérisé en ce que** les matières grasses et autres produits séparés sont, après séparation des résines et/ou des acides organiques, utilisés en tant que produits.

7. Procédé selon l'une des revendications précédentes, **caractérisé en ce que** la phase sumageante, en tant que fraction 2, est séparée de la seconde phase liquide au moyen d'un agent de séparation de produits légers.

8. Procédé selon l'une des revendications précédentes, **caractérisé en ce que** la séparation des terpènes de la phase liquide 2 (II), et réalisée par per-évaporation, après quoi il subsiste, du côté du perméat après condensation de la vapeur, un mélange de deux phases duquel les terpènes sont séparés par un agent de séparation de produit léger.

9. Procédé selon l'une des revendications précédentes, **caractérisé en ce que** la phase aqueuse, faiblement chargée seulement (fraction 3), est traitée au moyen de procédés biologiques, procédés à membrane, procédés par électrodialyse, procédés d'oxydation par voie humide, ou procédés d'oxydation chimique.

10. Procédé selon l'une des revendications précédentes, **caractérisé en ce que** la chaleur, engendrée lors de la condensation, est récupérée et utilisée sur le plan énergétique.

11. Installation pour la mise en oeuvre du procédé selon l'une des revendications précédentes, **caractérisée par** les caractéristiques suivantes :
a) une première étape (1) est réalisée par un appareil de contact, par exemple, par une colonne de lavage (4) munie d'un bassin (5) pouvant être refroidi et/ou chauffé pour le mélange et l'échange de produits entre la phase gazeuse et la phase liquide par le gaz brut, présentant un système de circulation pour la phase liquide 1 (I) qui présente un raccord pour la dérivation d'un écoulement partiel, en tant que fraction 1 ;
b) une deuxième étape (2) est réalisée ensuite au moyen d'un appareil de refroidissement, par exemple, un condenseur (7) pour refroidir le gaz brut partiellement purifié avec condensation simultanée des constituants du gaz condensables, et un récipient (8) pouvant être refroidi pour collecter le condensat avec une évacuation pour la phase liquide 2 (II) et une sortie de gaz pour le gaz purifié ;
c) l'évacuation pour la phase liquide 2 (II) est raccordée à un appareil de séparation (9) pour réaliser la troisième étape (3), par exemple, dans un séparateur de produits légers, pour séparer des terpènes de la phase liquide 2 (II).
